(19) Europäisches Patentamt
European Patent Office
Office européen des brevets

(11) **EP 4 311 817 A1**

(12) **EUROPEAN PATENT APPLICATION**

(43) Date of publication:
**31.01.2024 Bulletin 2024/05**

(21) Application number: **22187350.8**

(22) Date of filing: **27.07.2022**

(51) International Patent Classification (IPC):
**C04B 35/043** (2006.01)   **C04B 35/101** (2006.01)
**C04B 35/628** (2006.01)   **C01B 33/146** (2006.01)

(52) Cooperative Patent Classification (CPC):
**C04B 35/043; C01B 33/146; C04B 35/0435;**
**C04B 35/101; C04B 35/62802; C04B 35/62813;**
C04B 2235/3206; C04B 2235/3217;
C04B 2235/3418; C04B 2235/5427;
C04B 2235/5436; C04B 2235/6562;
C04B 2235/6567; C04B 2235/96; C04B 2235/9615

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Nouryon Chemicals International B.V.**
**6824 BM Arnhem (NL)**

(72) Inventors:
• **Santos Martinatti, Isabela**
  **6824BM Arnhem (NL)**

• **Roberto Teruo Tiba, Paulo**
  **6824BM Arnhem (NL)**
• **Greenwood, Peter Harry Johan**
  **6824BM Arnhem (NL)**
• **Salomão, Rafael**
  **6824BM Arnhem (NL)**

(74) Representative: **LKGlobal UK Ltd.**
**Cambridge House**
**Henry Street**
**Bath BA1 1BT (GB)**

(54) **COLLOIDAL SILICA-BONDED MGO-CONTAINING REFRACTORY CASTABLES**

(57)    Provided are compositions for producing magnesia-containing refractories comprising (i) magnesia, and (ii) a modified colloidal silica, in which the colloidal silica is modified with at least one organosilane moiety comprising a silicon atom bound to the carbon atom of an organic group. The composition may optionally further comprise alumina and/or water.

Fig. 2b

**MS + CS1+ sintering 1500ºC, 3h: Microstructure**

## Description

## TECHNICAL FIELD

The present invention relates to compositions for producing magnesia refractories, in particular to aqueous compositions comprising magnesia, modified colloidal silica, and optionally alumina. The invention also relates to a method of producing magnesia refractories as well as to the use of modified colloidal silica particles for preparing refractories and compositions for preparing refractories as well as for reducing cracks in refractories and as a pressing aid for magnesia sinter

## Technical Background

Magnesia (MgO) is widely used in the steelmaking industry for producing refractories because of its refractoriness (MgO has a melting point of above 2800°C), resistance to alkaline slag and competitive costs as it is a worldwide readily available raw material.

In principle, there are two methods of preparing magnesia refractories which are currently predominately used. In the first method MgO bricks are prepared usually in a central factory by pressing magnesia, usually in the form of magnesia particles, and a binder into a desired shape and the obtained pressed and compacted material (a so-called greenling or green state) is pre-sintered usually at around 1300°C to 1700°C for around 1 to 5 hours so to obtain a pre-sintered material (further also referred to as "the pressing method"). The thus obtained pre-sintered material is then shipped to the location of installation, the pre-sintered bricks are used to build the desired geometry of the intended structure, such as for instance of a furnace, and are then sintered again in a second sintering process to produce the final magnesia refractory material. For instance, during such second sintering process the entire structure is heated using gas burners up to the service temperature. Usually it is a process that takes one or two days to be completed because of the large mass of the structure and to avoid thermal shock during initial heating. After reaching service temperature, the material is put on service, i.e. in contact with molten metal. This method has the advantage that the pre-sintered bricks are much less sensitive to installation conditions, do not require a specific heating schedule and produce a desirably compact structure after initial heating up to operating temperature. However, the draw-back of this method is that the step of pre-sintering which as such is necessary to provide the greenling with sufficient strength for shipping requires high thermal energy which is totally lost due to the required cooling of the greenling to ambient temperature before shipping. Moreover, some typical binders used in this method, such as polyvinyl alcohol, also require the presence of a certain amount of water to provide optimum increase in green strength of the compacted material. MgO, however, is sensitive to hydroxylation, thereby forming magnesium hydroxide, in particular in the presence of water, be it from air humidity or added water. As hydroxylated magnesia has a different density than MgO, the formation of too much hydroxylated magnesia results in internal tension of the magnesia refractories causing cracks which are undesirable and significantly impairing the refractories' properties.

In the second method of preparing magnesia refractories, suspensions of magnesia and potential additives in water are formed and brought into shape already on site of the desired installation and further processed as castables (further also referred to as "the castables process"). The suspension is then firstly gelled, then let to dried and afterwards heated at temperatures of around 1300°C to 1700°C and then put into operation. Such method avoids a pre-sintering step and, hence, is in principle more desirable from an environmental viewpoint. However, due to the use of suspensions, significant amounts of water are necessary which even more severs the problem of undesired magnesium hydroxide formation. In addition, the suspension requires a delicate balance of additives such that gelling of the suspension is achieved within an acceptable time frame, which is usually between a few minutes to a few hours depending on the specific application. It is further desirable that a very homogenous suspension is formed and that the homogeneity is maintained during gelling, i.e. that for instance no supernatant forms during gelling. Moreover, due to the presence of high amounts of water, the preparation of such refractories requires very specific heating schedules to prevent explosive spalling by pressurized water vapor. In addition, the structures produced by this second method are not as compact as the structures obtained by the first method as described above.

Another base material which is widely used for refractories is alumina ($Al_2O_3$), in particular calcined alumina. Alumina may be used as the sole base material or in combination with magnesia. For improving the properties of the sintered alumina-containing refractories, in particular rigidity thereof, it is known to add unmodified, "normal" colloidal silica as a binder. In particular, the addition of colloidal silica to alumina reduces the required maximum sintering temperature, i.e. enough strength can be achieved at lower temperature, further increases the relative density, i.e. reduces the total porosity, and therefore increases compression and flexural strength of the final refractory material. However, all attempts to also use such unmodified, "normal" colloidal silica in magnesia-containing refractories completely failed and it is even commonly believed in the technical filed of refractories that magnesia and colloidal silica are incompatible.

Alternative binders commonly added to compositions for refractories in order provide higher rigidity to the sintered refractory material are hydratable alumina (HA) and calcium aluminate cement (CAC). However, these binders as well as unmodified, "normal" colloidal silica have the drawback that they do not sufficiently suppress the formation of magnesium hydroxide from magnesia in humid conditions. Moreover, hydratable alumina tends to form a very low permeability structure that presents high risk of explosive spalling during drying. Calcium aluminate cement can reduce refractoriness in compositions containing $Al_2O_3$, MgO and $SiO_2$ due to the formation of low melting point compounds. CAC also enhances pH of the castables which increases the driving force for hydroxylation of MgO.

Hence, there is a need for improved magnesia refractories wherein the magnesia is in particularly less prone to magnesium hydroxide formation than commonly used magnesia refractories. Moreover, it would be desirable that such magnesia refractories are less prone to crack formation than commonly used magnesia refractories. Even further, it would be desirable that such improved magnesia refractories are suitable for both preparation by pressing of greenlings or preparation as castables using suspensions. It would be further desirable if such castables allow for using lower pre-sintering and/or sintering temperatures than commonly used magnesia refractories. Even further, it would be desirable if such castables are homogenous and do not form supernatant during gelling. Even further, it would be desirable if the sintered refractories obtained from such improved magnesia refractory compositions have a rigidity which is comparable to the rigidity of sintered refractories obtained from magnesia refractory composition comprising the nowadays commonly applied binders hydratable alumina (HA) and calcium aluminate cement (CAC).

**Summary of the Invention**

The present invention provides a composition for producing magnesia-containing refractories comprising magnesia, modified colloidal silica, in which the colloidal silica is modified with at least one organosilane moiety comprising a silicon atom bound to the carbon atom of an organic group, optionally alumina and optionally water.

The invention is further directed to a method for preparing a refractory comprising providing a composition comprising magnesia, modified colloidal silica, optionally alumina and optionally water or, alternatively, the individual components magnesia, modified colloidal silica, optionally alumina, and optionally water; (ii) mixing the composition or the individual components magnesia, modified colloidal silica, optionally alumina and optionally water; (iii) pressing the obtained mixture into a desired shape; (iv) optionally, curing the obtained mixture, preferably at 1 to 80°C; (v) optionally, drying the obtained mixture, preferably at 80 to 400°C; and (vi) sintering the dried mixture, preferably at 800 to 2000°C.

The invention if further directed to the use of modified colloidal silica particles for preparing refractories and compositions for preparing refractories, in which the modified colloidal silica particles comprise at least one surface-bound organosilane moiety comprising a silicon atom bound to the carbon atom of an organic group.

The invention if further directed to the use of modified colloidal silica particles for reducing cracks in refractories, preferably for reducing cracks formed by the formation of magnesium hydroxide, in which the modified colloidal silica particles comprise at least one surface-bound organosilane moiety comprising a silicon atom bound to the carbon atom of an organic group.

The invention if further directed the use of modified colloidal silica particles as a pressing aid for magnesia sinter, in which the modified colloidal silica particles comprise at least one surface-bound organosilane moiety comprising a silicon atom bound to the carbon atom of an organic group.

The invention is advantageously employed in the preparation of magnesia-containing refractories, in particular at conditions where water is present and comes into contact with the magnesia

In the discussion below, "organosilane-modified collodial silica" may be referred to as an "organosilane-functionalised colloidal silica".

**Brief Description of Drawings**

Fig. 1:     A graph showing the dependence of the total solid silica content in a composition comprising magnesia and modified silica on the flexural Young's modulus.

Fig. 2a:   Electron microscopy picture of a sintered mixture comprising magnesia sinter and dissolved polyvinyl alcohol (PVA1).

Fig. 2b:   Electron microscopy picture of a sintered mixture comprising magnesia sinter and modified colloidal silica.

Fig. 3:     A graph showing the flexural Young's modulus and flexural strength in dependency on the modified silica content of inventive and comparative compositions.

Fig 4:      A graph showing the drying behavior of inventive and comparative compositions.

**EP 4 311 817 A1**

**Description of Embodiments**

It has been found that the compositions of the present invention provide improved performance in refractory applications. In particular, it has been found that the compositions of the present invention comprising magnesia are less prone to magnesium hydroxide formation than commonly used magnesia refractory compositions. Moreover, it has been found that the compositions of the present invention comprising magnesia are less prone to crack formation than commonly used magnesia refractory compositions. Even further, it has been found that the compositions of the present invention comprising magnesia are suitable for both preparation by pressing of greenlings or preparation as castables using suspensions. Additionally, it has also been found that the compositions of the present invention comprising magnesia allow for using lower pre-sintering and/or sintering temperatures than commonly used magnesia refractories.

The composition of the present invention for producing magnesia-containing refractories comprises magnesia, and modified colloidal silica, in which the colloidal silica is modified with at least one organosilane moiety comprising a silicon atom bound to the carbon atom of an organic group.

The magnesia is not limited and basically any type of magnesia, such as commercially available magnesia sinter, dead-burnt magnesia, or electrofused magnesia can be used in the present invention. Typical suppliers of magnesia are for instance RHI-Magnesita, Brazil, or IBAR, Brazil. In principle, magnesia may be used in any form, such as a powder or as particles. The use of magnesia articles, however, is preferred. Typically used magnesia particles may have a size in the range of 1-600 $\mu$m.

The modified colloidal silica comprises colloidal silica particles in which the colloidal silica is modified with at least one organosilane moiety comprising a silicon atom bound to the carbon atom of an organic group particles. In other words, in the modified colloidal silica used in the present invention at least a portion of the surface silanol groups are replaced with one or more chemically bound organosilane groups. The modified colloidal silica acts in principle as a binder in the composition of the present invention. Without wishing to be bound be theory, it is believed that the modified silica fills the gaps in the magnesia structures and, hence, contributes to providing a denser structure. In particular, it is assumed that the modified silica in the magnesia induces spinel grain growth which results in stiffer refractory materials.

The chemically bound organosilane groups comprise a silicon atom attached to a group -$R^m$. From one to three -$R^m$ groups can be present on the silicon atom of the organosilane moiety. Typically, there are at most two -$R^m$ groups, and in embodiments only one. Where there is more than one -$R^m$ group, they can be the same as each other or different from each other.

The organosilane-functionalised colloidal silica can be made by conventional processes, as described for example in WO 2004/035473 and WO 2004/035474. Typically, the organosilane-functionalised colloidal silica is formed from a reaction between an organosilane reactant, $T_{a-y}Si$-$[R^m]_y$, and one or more silanol groups on the silica surface, i.e. $[SiO_2]$—OH groups. In the organosilane reactant, each T is typically independently selected from $C_{1-6}$ alkoxy, $C_{1-6}$ haloalkoxy, hydroxy and halide. Other options are the use of siloxanes, e.g. of formula $[R^m]_b T_{3-b}Si\{-O-SiT_{2-c}[R^m]_c\}_a-O-SiT3_{-b}[R^m]_b$ where a is 0 or an integer of 1 or more, typically from 0 to 5, and b is from 1 to 3 and c is from 1 to 2. Other examples include disilazanes, of formula $\{[R^m]_b T_{3-b}Si\}_2$-NH where b is from 1 to 3. Of the haloalkoxy groups, fluoro and chloro are preferred halo substituents. Alkoxy groups and halides are often preferred as the T species. Of the halides, chloride is a suitable choice. Of the alkoxy groups, $C_{1-4}$ alkoxy groups, such as methoxy, ethoxy, propoxy or isopropoxy, are suitable choices. In embodiments, the organosilane reactant can undergo a prehydrolysis step, in which one or more T groups are converted to -OH, as described for example by Greenwood and Gevert, Pigment and Resin Technology, 2011, 40(5), pp 275-284.

The organosilane reactant can react with a surface silanol group to form from one to three Si-O-Si links between the silica surface and the organosilane silicon atom, i.e. $\{[SiO_2]-O-\}_{4-y-z} [T]_z Si-[R^m]_y$ where 4-y-z is from 1 to 3, and is usually in the range of from 1 to 2. A corresponding number of T groups are removed from the organosilane as a result. For example, if T is an alkoxy unit, an alcohol will be produced.

It is also possible for at least a portion of the organosilane to be in a dimeric form or even oligomeric form before binding to the colloidal silica, i.e. where the two or more organosilane moieties are bound to each other through Si-O-Si bonds.

The chemically bound organosilane groups can be represented by the formula $[\{SiO_2\}-O-]_{4-y-z}[Z]_z Si-[R^m]_y$. The group $\{SiO_2\}$-O- represents an oxygen atom on the silica surface. The organosilane silicon atom has at least one, and optionally up to three such bonds to the silica surface, i.e. 4-y-z is at least 1, and no more than 3. Group Z is optionally present, and z is in the range of from 0 to 2. The organosilane silicon atom has from 1 to 3 $[R^m]$ groups, i.e. y is from 1 to 3, typically from 1 to 2. Where there is more than 1 $R^m$ group, they can be the same or different.

When z is not zero, the organosilane silicon contains unreacted T groups, and/or contains hydroxyl groups where the T group has been removed, for example through a hydrolysis reaction. Alternatively or additionally, an Si-O-Si link can be formed with the silicon atom of a neighbouring organosilane group. Thus, in the formula $\{[SiO_2]-O-\}_{4-y-z}[Z]_z Si-[R^m]_y$, group Z can (on each occurrence) be selected from the groups defined under T above, and also from hydroxy groups and -O-$[SiR^m]'$ groups where the $[SiR^m]'$ group is a neighbouring organosilane group.

$R^m$ is an organic moiety, and typically comprises from 1 to 16 carbon atoms, for example from 1 to 12 carbon atoms, or from 1 to 8 carbon atoms. It is bound to the organosilane silicon by a direct C-Si bond.

Where there is more than one $R^m$ group (i.e. if y is greater than 1), then each $R^m$ can be the same or different.

$R^m$ is selected from alkyl, alkenyl, epoxy alkyl, aryl, heteroaryl, $C_{1-6}$ alkylaryl and $C_{1-6}$ alkylheteroaryl groups, optionally substituted with one or more groups selected from $ER^n$, isocyanate and isocyanurate.

In $ER^n$, E is either not present, or is a linking group selected from -O-, -S-, -OC(O)-, -C(O)-, -C(O)O-, -C(O)OC(O)-, -N($R^p$)-, -N($R^p$)C(O)-, -N($R^p$)C(O)N($R^p$)- and -C(O)N($R^p$)- where $R^p$ is H or $C_{1-6}$ alkyl. Preferably, E is -O-, -N(Rp)- or -N($R^p$)C(O)N($R^p$)-.

$R^n$ is linked to E, or directly to $R^m$ if E is not present, and is selected from halogen (typically F, Cl or Br), alkyl, alkenyl, aryl, heteroaryl, $C_{1-3}$ alkylaryl and $C_{1-3}$ alkylheteroaryl. $R^n$ can optionally be substituted with one or more groups selected from hydroxyl, halogen (typically F, Cl or Br), epoxy, -O$R^p$ or -N($R^p$)$_2$ where each $R^p$ is as defined above. If E is present, $R^n$ can also be hydrogen.

In the above definitions, alkyl and alkenyl groups can be aliphatic, cyclic or can comprise both aliphatic and cyclic portions. Aliphatic groups or portions can be linear or branched. Where any group or substituent comprises halogen, the halogen is preferably selected from F, Cl and Br.

Some groups can undergo hydyrolysis reactions under conditions experienced in the colloidal silica medium. Thus, groups containing moieties such as halide, acyloxy, (meth)acryloxy and epoxy groups can hydrolyse to form corresponding carboxyl, hydroxyl or glycol moieties.

In embodiments, one or more $R^m$ groups are $C_{1-8}$ alkyl, $C_{1-8}$ haloalkyl, $C_{1-8}$ alkenyl or $C_{1-8}$ haloalkenyl, typically $C_{1-8}$ alkyl or $C_{1-8}$ alkenyl, with an optional halide (e.g. chloride) substituent. Examples include methyl, ethyl, chloropropyl, isobutyl, cyclohexyl, octyl and phenyl. These $C_{1-8}$ groups can, in embodiments, be $C_{1-6}$ groups or, in further embodiments, $C_{1-4}$ groups. Longer carbon chains tend to be less soluble in aqueous systems, which makes synthesis of the organosilane-modified colloidal silicas more complex.

In embodiments, $R^m$ can be an alkyl isocyanate, for example propylisocyanate. $R^m$ can also comprise an isocyanurate moiety, for example it can be or comprise a propylisocyanurate moiety.

In preferred embodiments, $R^m$ is a hydrophilic moiety. In embodiments, $R^m$ is a hydrophilic moiety containing at least one group selected from hydroxyl, thiol, carboxyl, ester, epoxy, acyloxy, ketone, aldehyde, glycol ether (such as preferably polyglycol ether (PEG)), (meth)acryloxy, amino, amido, ureido, isocyanate or isocyanurate, preferably hydroxyl, amino, glycol ether (such as preferably polyglycol ether (PEG)), ureido or ethylene glycol silane, and even more preferably hydroxyl, amino, ureido or ethylene glycol silane. In further embodiments, hydrophilic moieties comprises at least one heteroatom selected from O and N, and comprise no more than three consecutive alkylene (-$CH_2$-) groups linked together.

In embodiments, $R^m$ is a group comprising from 1 to 8 carbon atoms, e.g. a $C_{1-8}$ alkyl group, and which additionally comprises an $ER^n$ substituent where E is oxygen and $R^n$ is selected from optionally substituted $C_{1-8}$-epoxy-alkyl and $C_{1-8}$ hydroxyalkyl. Alternatively, $R^n$ can be optionally substituted alkylisocyanurate. Examples of such $ER^n$ substituents include 3-glycidoxypropyl and 2,3-dihydroxypropoxypropyl.

In embodiments, $R^m$ is a group comprising from 1 to 8 carbon atoms, e.g. a $C_{1-8}$ alkyl group, and which additionally comprises an $ER^n$ substituent where E is not present, and $R^n$ is epoxyalkyl, for example an epoxycycloalkyl. An example of such an $R^m$ group is beta-(3,4-epoxycyclohexyl)ethyl. The epoxy group can alternatively be two neighbouring hydroxyl groups, e.g. $R^n$ can be a dihydroxyalkyl such as a dihydroxycycloalkyl, and $R^m$ being (3,4-dihydroxycyclohexyl)ethyl.

In embodiments, where there is more than one $R^m$ group on the Si atom of the organosilane, at least one is a $C_{1-8}$ alkyl or alkenyl group.

Examples of organosilane reactants that can be used to make such functionalised colloidal silica include octyl triethoxysilane; methyl triethoxysilane; methyl trimethoxysilane; tris-[3-(trimethoxysilyl)propyl]isocyanurate; 3-mercaptopropyl trimethoxysilane; beta-(3, 4-epoxycyclohexyl)-ethyl trimethoxysilane; silanes containing an epoxy group (epoxy silane), glycidoxy and/or a glycidoxypropyl group such as 3-(glycidoxypropyl) trimethoxy silane (which can also be known as trimethoxy[3-(oxiranylmethoxy)propyl] silane), 3-glycidoxypropyl methyldiethoxysilane, (3-glycidoxypropyl) triethoxy silane, (3-glycidoxypropyl) hexyltrimethoxy silane, beta-(3, 4-epoxycyclohexyl)-ethyltriethoxysilane; 3-methacryloxypropyl trimethoxysilane, 3-methacryloxypropyl triisopropoxysilane, 3-methacryloxypropyl triethoxysilane, octyltrimethoxy silane, ethyltrimethoxy silane, propyltriethoxy silane, phenyltrimethoxy silane, 3-mercaptopropyltriethoxy silane, cyclohexyltrimethoxy silane, cyclohexyltriethoxy silane, dimethyldimethoxy silane, 3-chloropropyltriethoxy silane, 3-methacryloxypropyltrimethoxy silane, i-butyltriethoxy silane, trimethylethoxy silane, phenyldimethylethoxy silane, hexamethyldisiloxane, trimethylsilyl chloride, ureidomethyltriethoxy silane, ureidoethyltriethoxy silane, ureidopropyltriethoxy silane, hexamethyldisilizane, and mixtures thereof. US 4 927 749 discloses further suitable silanes which may be used in the present invention.

The most preferred organosilanes comprise epoxy groups, for example epoxyalkyl silanes or epoxyalkyloxyalkyl silanes. Hydroxyl-substituted groups are also preferred, for example hydroxyalkyl and hydroxyalkyloxyalkyl groups comprising one or more hydroxyl groups, e.g. 1 or 2 hydroxyl groups. Examples include organosilanes containing a glycidoxy, glycidoxypropyl, dihydropropoxy or dihydropropoxypropyl group. These can be derived from organosilane reactants such as (3-glycidoxypropyl)trimethoxysilane, (3-glycidoxypropyl)triethoxysilane and (3-glycidoxypropyl)methyldiethoxysilane. In the compositions of the invention, epoxy groups can hydrolyse to form corresponding vicinal diol groups. Therefore, the invention also encompasses the diol equivalents of the above epoxy group-containing compounds.

There can be more than one different organosilane in the modified (or "functionalised") colloidal silica, for example where the organosilane-modified silica is produced by reacting a mixture of two or more organosilanes with colloidal silica, or by mixing two or more separately prepared organosilane-modified colloidal silicas.

The silane compounds can form stable covalent siloxane bonds (Si-O-Si) with the silanol groups. In addition, they can be linked to the silanol groups, e.g. by hydrogen bonds, on the surface of the colloidal silica particles. It is possible that not all silica particles become modified by organosilane. The proportion of colloidal silica particles that become functionalised with organosilane will depend on a variety of factors, for example the size of the silica particles and the available surface area, the relative amounts of organosilane reactant to colloidal silica used to functionalise the colloidal silica, the type of organosilane reactants used and the reaction conditions.

The degree of modification (DM) of silica surface by organosilane can be expressed according to the following calculation (Equation 1), in terms of the number of silane molecules per square nanometre of silica surface:

$$DM = \frac{A \times N_{organosilane}}{(S_{silica} \times M_{silica} \times 10^{18})} \qquad \text{Equation 1}$$

wherein:

- DM is the degree of surface modification in units of $nm^{-2}$;
- A is Avogadro's constant;
- $N_{organosilane}$ is the number of moles of organosilane reactant used;
- $S_{silica}$ is the surface area of the silica in the colloidal silica, in $m^2\,g^{-1}$; and
- $M_{silica}$ is the mass of silica in the colloidal silica, in g.

DM can be at least 0.8 molecules of silane per $nm^2$, and is preferably in the range of from 0.8 to 4 molecules per $nm^2$. Preferred embodiments have DM in the range of from 1 to 3, for example from 1 to 2.

In the above equation 1, the surface area of the silica is conveniently measured by Sears titration.

The colloidal silica used in the composition of the present invention is a stable colloid. By "stable" is meant that the organosilane-functionalised colloidal silica particles dispersed in the (usually aqueous) medium does not substantially gel or precipitate within a period of at least 2 months, and preferably at least 4 months, more preferably at least 5 months at normal storage at room temperature (20°C).

Preferably, the relative increase in viscosity of the silane-functionalised colloidal silica dispersion between its preparation and up to two months after preparation is lower than 100%, more preferably lower than 50%, and most preferably lower than 20%.

Preferably, the relative increase in viscosity of the silane-functionalised colloidal silica between its preparation and up to four months after preparation is lower than 200%, more preferably lower than 100%, and most preferably lower than 40%.

The silica particles within the silica sols can be modified with one or more additional oxides, for example, with aluminium oxide or boron oxide. Boron-modified silica sols are further described in e. g. US 2 630 410. Alumina-modified silica particles suitably have an $Al_2O_3$ content of from about 0.05 to about 3 wt%, for example from about 0.1 to about 2 wt%. The procedure of preparing an alumina-modified silica sol is further described e.g. in "The Chemistry of Silica", by Iler, K. Ralph, pages 407-409, John Wiley & Sons (1979) and in US 5 368 833.

Typically, the silica in the colloidal silica does not contain any added additional oxides, and contains no more than trace or impurity amounts in each case, for example less than 1000 ppm by weight each of additional oxides. Typically, the total amount of non-silica oxides present in the sol is less than 5000 ppm by weight, preferably less than 1000 ppm.

The colloidal silica particles suitably have an average particle diameter ranging from 2 to 150 nm, preferably from about 3 to about 50 nm, and most preferably from 5 to 25 nm. In preferred embodiments, the average particle diameter is in the range of from 6 to 20 nm. Suitably, the colloidal silica particles have a specific surface area from 20 to 1500 $m^2\,g^{-1}$, preferably from 50 to 900 $m^2\,g^{-1}$, and more preferably from 70 to 600 $m^2\,g^{-1}$, for example from 70 to 400 $m^2\,g^{-1}$. The surface areas are often expressed as the surface areas of the "bare" or "unfunctionalised" colloidal silicas that are used for the synthesis. This is because functionalisation of a silica surface can complicate the surface area measurements. Surface areas can be measured using Sears titration (G.W.Sears; Anal. Chem., 1956, 28(12) pp1981-1983). The particle diameter can be calculated from the titrated surface area using a method described in "The Chemistry of Silica", by Iler, K. Ralph, page 465, John Wiley & Sons (1979). Based on the assumption that the silica particles have a density of 2.2 g cm$^{-3}$, and that all particles are of the same size, have a smooth surface area and are spherical, then the particle diameter can be calculated from Equation 2:

$$\text{Particle diameter(nm)} = \frac{2720}{\text{Surface Area(m}^2\text{g}^{-1}\text{)}} \qquad \text{Equation 2}$$

The colloidal silica particles suitably are dispersed in water in presence of stabilising cations, which are typically selected from $K^+$, $Na^+$, $Li^+$, $NH_4^+$, organic cations, quaternary amines, tertiary amines, secondary amines, and primary amines, or mixtures thereof so as to form an aqueous silica sol. Dispersions can also comprise organic solvents, typically those that are water miscible e. g. lower alcohols, acetone or mixtures thereof, preferably in a volume ratio to water of 20% or less. Preferably, no solvents are added to the colloidal silica or functionalised colloidal silica. Organic solvents in the composition can arise during synthesis of the organosilane-functionalised colloidal silica, due to reaction of organosilane reactant with the silica. For example, if the organosilane reactant is an alkoxide, then the corresponding alcohol will be produced. The amount of any organic solvent is preferably kept below 20% by weight, preferably less than 10% by weight.

The silica content of the functionalised silica sol before mixing with accelerator is preferably in the range of from 5 to 60% by weight, more preferably from 10 to 50%, and most preferably from 15 to 45%. This is expressed as weight% of unfunctionalised silica, and is calculated from the weight% of silica in the colloidal silica source before modification with organosilane. In the presence of accelerator, the content of silica in the final composition is typically in the range of from 3 to 58 wt%, for example from 10 to 55 wt%, such as from 15 to 50 wt%, expressed as weight% of unfunctionalised silica (i.e. as $SiO_2$).

The pH of the functionalised silica sol is suitably in the range of from 1 to 13, preferably from 2 to 12, such as from 4 to 12, or from 6 to 12, and most preferably from 7.5 to 11. Where the silica is aluminium-modified, the pH is suitably in the range of from 3.5 to 11.

The functionalised colloidal silica, before being mixed with accelerator, suitably has an S-value from 20 to 100, preferably from 30 to 90, and most preferably from 60 to 90.

The S-value characterises the extent of aggregation of colloidal silica particles, i.e. the degree of aggregate or microgel formation. The S-value can be measured and calculated according to the formulae given in Iler, R. K. & Dalton, R. L. in J. Phys. Chem., 60 (1956), 955-957.

The S-value is dependent on the silica content, the viscosity, and the density of the colloidal silica. A high S-value indicates a low microgel content. The S-value represents the amount of $SiO_2$ in percent by weight present in the dispersed phase of a silica sol. The degree of microgel can be controlled during the production process as further described in e.g. US 5 368 833.

In embodiments, the weight ratio of organosilane to silica in the silane-functionalised silica sol is from 0.003 to 1.5, preferably from 0.006 to 0.5, and most preferably from 0.015 to 0.25.

In this context, the weight of organosilane in the dispersion is calculated as the total amount of possible free organosilane compounds and organosilane derivatives or groups bound or linked to the silica particles, i.e. based on the total amount of organosilane reactant(s) initially added to the colloidal silica to produce the organosilane modified silica, and not necessarily based on a direct measure of how much organosilane is actually chemically bound to the silica.

It has been found that such compositions comprising magnesia and a modified colloidal silica, in which the colloidal silica is modified with at least one organosilane moiety comprising a silicon atom bound to the carbon atom of an organic group are particularly suitable for producing magnesia-containing refractories via the pressing method, because such compositions allow for a reduction of the temperatures of the required pre-sintering. For instance, it has been found that the rigidity of a greenling containing a modified colloidal silica which is modified with at least one organosilane moiety comprising a silicon atom bound to the carbon atom of an organic group after being pre-sintered for instance at around 1000-1300°C is similar to the rigidity of a greenling which does not contain such silica after being pre-sintered at a presently used standard temperature of 1500°C. In other words, the addition of the specific modified silica as described herein allows for a reduction of the pre-sintering step of at least 200 up to 500°C and even more without impairing the quality of the obtained pre-sintered material. Such temperature reduction reduces the carbon dioxide footprint of the whole method and also significantly save costs. Moreover, no signs of damage due to hydroxylation of magnesia was found when adding the specific modified silica as described herein in magnesia-containing refractories. In other words, it was unexpectedly found that the specific modified silica as described herein helps to suppress hydroxylation of magnesia.

The content of magnesia and the modified colloidal silica as described herein in the inventive compositions is not particularly limited and, hence, in principle any amounts of these components of the composition can be used. For instance, in embodiments, the content of magnesia is from 1 to 99.9 wt.-%, such as from 1 to 99 wt.-%, from 1 to 95 wt.%, from 1 to 90 wt.%, from 1 to 85 wt.%, or from 1 to 80 wt.%, and preferably from 1 to 70 wt.%, more preferably from 5 to 60 wt.%, even more preferably from 10 to 50 wt.%, such as from 15 to 40 wt.%, and most preferably from 20 to 30 wt.%, the wt.% being based on the total weight of the composition for producing magnesia-containing refractories.

In further embodiments, the content of magnesia is from 5 to 99.9 wt.%, such as from 10 to 99.9 wt. %, from 20 to 99.9 wt.%, or from 30 to 99.9 wt.%, the wt.% being based on the total weight of the composition for producing magnesia-containing refractories. These content ranges are particularly suitable if the inventive composition comprises magnesia and the modified colloidal silica as described herein as the main components.

The content of the modified colloidal silica may be from 0.1 to 99 wt.%, such as from 0.1 to 95 wt.%, from 0.1 to 90 wt.%, from 0.1 to 80 wt.%, or from 0.1 to 70 wt.%, preferably from 0.1 to 50 wt.%, more preferably from 0.5 to 40 wt.%, even more preferably from 1 to 30 wt.%, such as from 5 to 20 wt.%, and most preferably from 7 to 15 wt.%, the wt.% being based on the total weight of the composition for producing magnesia-containing refractories.

For instance, the composition of the present invention may comprise 1 to 99.9 wt.% magnesia and 0.1 to 99 wt.% of the modified colloidal silica as described herein. In embodiments, the composition of the present invention comprises 20 to 99.9 wt.% magnesia and 0.1 to 80 wt.% of the modified colloidal silica as described herein. In other embodiments, the composition of the present invention comprises 30 to 99.9 wt.% magnesia and 0.1 to 70 wt.% of the modified colloidal silica as described herein. In other embodiments, the composition of the present invention comprises 50 to 99.9 wt.% magnesia and 0.1 to 50 wt.% of the modified colloidal silica as described herein. In other embodiments, the composition of the present invention comprises 70 to 99 wt.% magnesia and 1 to 30 wt.% of the modified colloidal silica as described herein. In preferred embodiments, the composition of the present invention comprises 75 to 98 wt.% magnesia and 2 to 25 wt.% of the modified colloidal silica as described herein. In particular preferred embodiments, the composition of the present invention comprises 80 to 95 wt.% magnesia and 5 to 20 wt.% of the modified colloidal silica as described herein. All wt.% are based on the total weight of the composition for producing magnesia-containing refractories.

The composition of the present invention may further comprise alumina (aluminum oxide, $Al_2O_3$). The alumina is not limited and basically any type of alumina, such as commercially available alpha-alumina (calcined alumina), or rho-alumina (hydratable alumina) can be used in the present invention. These names are based on the crystallographic phase identification of the respective alumina. Typical suppliers of alumina are for instance Almatis, USA, Alcoa Aluminio, Brazil or Rio Tinto, Australia. The most common and source of alumina used in refractories is alpha-alumina and alpha-alumina is also the preferably used alumina in the present invention. There are also grades of alpha-alumina the microstructure of which differ, such as calcined alumina, fused alumina, and tabular alumina (typically in the form of coarse particles or aggregates). All these different grades of alumina can be equally be used in the present invention.

Surprisingly, it has been found that inventive compositions comprising magnesia, alumina, and specifically a modified colloidal silica, in which the colloidal silica is modified with at least one organosilane moiety comprising a silicon atom bound to the carbon atom of an organic group are particularly suitable for the preparation of magnesia-containing refractories via the castables-process, because in such compositions the magnesia shows a desirably low tendency to hydroxylation. Hence, the formation of magnesium hydroxide induced cracks is reduced by the presence of the modified colloidal silica as described herein.

The content of alumina in the inventive compositions is not particularly limited and, hence, in principle any amount thereof can be used. For instance, the content of alumina may be from 10 to 98.9 wt.%, preferably from 20 to 95 wt.%, more preferably from 30 to 90 wt.%, even more preferably from 40 to 80 wt.% and most preferably from 50 to 70 wt.%, the wt.% being based on the total weight of the composition for producing magnesia-containing refractories. Hence, if alumina is present in the composition of the present invention, the composition of the present invention may comprise 1 to 70 wt.% magnesia, 10 to 98.9 wt.% alumina, and 0.1 to 50 wt.% of the modified colloidal silica as described herein. In embodiments, the composition of the present invention may comprise 5 to 60 wt.% magnesia, 20 to 94.5 wt.% alumina, and 0.5 to 40 wt.% of the modified colloidal silica as described herein. In further embodiments, the composition of the present invention may comprise 5 to 60 wt.% magnesia, 20 to 94.5 wt.% alumina, and 0.5 to 40 wt.% of the modified colloidal silica as described herein. In further embodiments, the composition of the present invention may comprise 10 to 50 wt.%, preferably 15 to 40 wt.% magnesia, 30 to 89 wt.%, preferably 40 to 78 wt.% alumina, and 1 to 30 wt.%, preferably 2 to 20 wt.% of the modified colloidal silica as described herein. In preferred embodiments, the composition of the present invention may comprise 20 to 30 wt.% magnesia, 50 to 75 wt.% alumina, and 5 to 20 wt.%, such as 5 to 15 wt.% of the modified colloidal silica as described herein. All wt.% are based on the total weight of the composition for producing magnesia-containing refractories.

The composition of the present invention may further comprises water, preferably in an amount of 1 to 50 wt.%, such as 2 to 45 wt.%, more preferably of 5 to 40 wt.%, even more preferably from 8 to 30 wt.%, and most preferably of 10 to 20 wt.%, the wt.% being based on the total weight of the composition for producing magnesia-containing refractories.

Hence, if water is present in the composition of the present invention, the composition of the present invention may comprise 1 to 98.9 wt.% magnesia, 0.1 to 98 wt.% the modified colloidal silica as described herein, and 1 to 50 wt.% of water. In embodiments, the composition of the present invention may comprise 20 to 97.9 wt.% magnesia, 0.1 to 78 wt.% the modified colloidal silica as described herein, and 2 to 45 wt.% of water. In further embodiments, the composition of the present invention may comprise 30 to 94.9 wt.% magnesia, 0.1 to 65 wt.% the modified colloidal silica as described herein, and 5 to 40 wt.% of water. In further embodiments, the composition of the present invention may comprise 50 to 94.9 wt.%, preferably 70 to 91 wt.% magnesia, 0.1 to 50 wt.%, preferably 1 to 30 wt.% the modified colloidal silica as described herein, and 5 to 40 wt.%, preferably 8 to 30 wt.% of water. In preferred embodiments, the composition of the present invention may comprise 75 to 93 wt.%, such as 80 to 87 wt.% or 80 to 85 wt.%, magnesia, 2 to 25 wt.% the modified colloidal silica as described herein, such as 5 to 20 wt.%, and 5 to 40 wt.% of water, such as 8 to 30 wt.% or 10 to 20 wt.%. All wt.% are based on the total weight of the composition for producing magnesia-containing refractories.

If alumina and water are present in the composition of the present invention, the composition of the present invention may comprise 1 to 70 wt.% magnesia, 10 to 97.9 wt.% alumina, 1 to 50 wt.% water, and 0.1 to 50 wt.% of the modified colloidal silica as described herein. In embodiments, the composition of the present invention may comprise 5 to 60 wt.% magnesia, 20 to 92.5 wt.% alumina, 2 to 45 wt.% water, and 0.5 to 40 wt.% of the modified colloidal silica as described herein. In further embodiments, the composition of the present invention may comprise 5 to 60 wt.% magnesia, 20 to 89.5 wt.% alumina, 5 to 40 wt.% water, and 0.5 to 40 wt.% of the modified colloidal silica as described herein. In further embodiments, the composition of the present invention may comprise 10 to 50 wt.%, preferably 15 to 40 wt.% magnesia, 30 to 81 wt.%, preferably 40 to 78 wt.% alumina, 8 to 30 wt.%, preferably 8 to 25 wt.%, water, and 1 to 30 wt.%, preferably 2 to 20 wt.% of the modified colloidal silica as described herein. In preferred embodiments, the composition of the present invention may comprise 20 to 30 wt.% magnesia, 50 to 65 wt.% alumina, 10 to 20 wt.% water, and 5 to 20 wt.%, such 5 to 15 wt.% of the modified colloidal silica as described herein. All wt.% are based on the total weight of the composition for producing magnesia-containing refractories.

The composition of the present invention may in principle comprise any further additives which are usually used in compositions for producing magnesia-containing refractories. For instance, such compositions may comprise further binders such as such as calcium aluminate cement, hydratable alumina, colloidal alumina, phosphate-based binders, phenolic resin, bentonite, and plaster. Additionally, such composition may comprise dispersants, such as (poly(ammonium acrylate); lignosulphonates, citric acid, poly(ethylene glycol, etc. These further additives are usually comprised in the composition of the present invention in a total amount of not more than 20 wt.%, such as not more than 15 wt.% or not more than 10 wt.%. Preferably, these further additives are comprised in the composition of the present invention in a total amount of not more than 8 wt.%, such as not more than 5 wt.% or not more than 3 wt.% or even not more than 1 wt.%. In certain embodiments, the composition of the present invention does not comprise further additives and consequently only consists of magnesia, the modified colloidal silica as described herein, optionally alumina and optionally water. If the composition of the present invention consists of magnesia, the modified colloidal silica as described herein, optionally alumina and optionally water, these components may be present in the amounts as defined above.

In some embodiments, the composition of the present invention is basically free of calcium aluminate cement. The term "basically free" means that the amount of calcium aluminate cement is less than 1 wt.% or even less than 0.5 wt.%. In other embodiments, the composition of the present invention is completely free of calcium aluminate cement, i.e. the composition of the present invention does not contain any calcium aluminate cement at all

The present invention further relates to magnesia-containing refractories which are obtained from the compositions for producing magnesia-containing refractories as described herein.

For instance, according to the present invention, magnesia-containing refractories may be prepared using the following process for preparing a refractory comprising

(i) providing a composition as described herein or, alternatively, the individual components magnesia, modified colloidal silica, optionally alumina, and optionally water;
(ii) mixing the composition or the individual components magnesia, modified colloidal silica, optionally alumina and optionally water;
(iii-a) optionally, pressing the obtained mixture into a desired shape; or
(iii-b) optionally, curing the obtained mixture, preferably at 1 to 80°C;
(iv) optionally, drying the obtained mixture, preferably at 80 to 400°C; and
(v) sintering the mixture, preferably at 800 to 2000°C.

In step (i), an already prepared composition for producing magnesia-containing refractories as described herein is provided. Alternatively, it is of course also possible that the individual components magnesia, modified colloidal silica, optionally alumina, and optionally water are provided individually.

In step (ii), the composition as described herein is mixed for homogenously distributing the components. Alternatively, the individual components magnesia, modified colloidal silica, optionally alumina, and optionally water are mixed together to form a homogenous mixture. It is possible to separately mix first two or three of the components and then to add further components. Mixing can be performed in any commonly known mixing equipment, such as for instance a ball mill, a paddle mixer, a concrete mixer, or an Eirich mixer.

In step (iii-a), the mixture obtained in step (ii) is optionally pressed into a desired shape. This step is usually performed if a refractory is prepared using the pressing process. Pressing or compacting may be performed using standard methods and equipment well-known by the skilled person, for instance by using a set comprising an inferior actuator, a cavity in the desired shape and a superior actuator. Pressing conditions may vary from the particular composition used but the applied pressure needs to be sufficient that a stable green body is formed which can be transferred to a sintering step. Typically, compacting pressures of 1-100 MPa are used.

In step (iii-b), which is an alternative step to step (iii-a), the mixture obtained in step (ii) is optionally cured. Curing the mixture means basically gelling the mixture. This step is usually performed if a refractory is prepared using the castables process in order to ensure that the castable has a defined shape and is sufficiently stable so that it can be transferred to a sintering step. Curing of the mixture is preferably performed between 1 to 80°C, more preferably at 10 to 80°C, even more preferably at 40 to 70°C, and most preferably at around 60°C. Curing should be sufficiently slow to allow proper mixing of the components and to get the composition in the desired shape. As the skilled person will appreciate, the required minimum curing time is temperature dependent, i.e. curing at higher temperatures will require less time than curing at lower temperatures. The skilled person can easily determine a suitable curing time for a given composition. Typically, curing should require at least 2 minutes, preferably at least 5 minutes, even more preferably at least 10 minutes, or even at least 30 minutes. Curing may require a longer time, such as several hours up to even several days, in particular, if lower curing temperatures, such as temperatures in the ambient range, i.e. 20-25°C, are used. In order to ensure sufficient curing, curing should be performed for at least 1 hour, or at least 5 hours or at least 10 hours. For instance, curing may be performed from 12 to 200 hours, preferably from 16 to 168 hours, and more preferably 20 to 120 hours such as 24 to 72 hours or 24 to 36 hours. Most preferably, curing is performed for around 24 hours.

In step (iv), the mixture is optionally dried. Drying reduces the amount of water in the composition and a reduction of water in the composition before sintering is desirable as too much water in a composition will evaporate during sintering in the sintered material and cause cracks. Depending on the amount of water and the stiffness of the sintered material, the sintered material may even explode. Drying the mixture obtained in step (ii) or after an additional step (iii-a) or (iii-b) may be performed at 80 to 400°C, i.e. at temperatures close or higher than the boiling point of water but well below sintering temperatures. Drying may be performed for 1 minute up to several days. The duration of drying may be dependent from the temperature used for drying. Typically, compositions of the present invention are dried for 1 minute up to 24 hours, such as from 5 minutes to 12 hours.

In step (v), the mixture obtained in step (ii) or after an additional step (iii-a) or (iii-b) or after optional drying step (iv) is sintered. Typical sintering temperatures are between 800 and 2000°C, such as between 1200 and 1800°C or between 1300 and 1500°C. Sintering is usually performed for at least 10 minutes up to 24 hours, such as up to 12 hours, up to 10 hours or up to 8 hours. However, it is also sensible that the refractory materials are directly put into service after the sintering step without any cooling down for weeks or even months. The sintering stiffens the refractory. Without sintering, the pressed or compacted compositions are weak and can be easily deagglomerated even by hand.

In a further aspect, the present invention relates to the use of the modified colloidal silica particles for preparing refractories and compositions for preparing refractories, in which the modified silanized colloidal silica particles comprise at least one surface-bound organosilane moiety comprising a silicon atom bound to the carbon atom of an organic group. The modified colloidal silica particles as well as the compositions for preparing refractories and their components are the same as already described herein.

In an even further aspect, the present invention relates to the use of modified colloidal silica particles for reducing cracks in refractories, preferably for reducing cracks in magnesia refractories formed by the formation of magnesium hydroxide, in which the modified colloidal silica particles comprise at least one surface-bound organosilane moiety comprising a silicon atom bound to the carbon atom of an organic group. The modified colloidal silica particles as well as the refractories and their components are the same as already described herein.

In an even further aspect, the present invention relates to the use of modified colloidal silica as a pressing aid for magnesia sinter, in which the modified colloidal silica particles comprise at least one surface-bound organosilane moiety comprising a silicon atom bound to the carbon atom of an organic group. The modified colloidal silica particles as well as the magnesia sinter are the same as already described herein.

**Examples**

The following non-limiting examples illustrate how to practice the invention.

Colloidal silica 1 (CS1)

An organosilane modified colloidal silica having a surface area of 220 m$^2$/g and a particle diameter of 12 nm.

The modified colloidal silica contained 39.81 wt% silica, and had a pH of 6-8. The degree of modification was 1.7 molecules per nm$^2$ of silica surface, measured by Sear's titration. The organosilane compound used to modify the silica was (3-glycidyloxypropyl)triethoxysilane.

Colloidal Silica 2 (CS2)

An organosilane modified colloidal silica having a surface area of 360 m$^2$/g and a particle diameter of 8 nm. The modified colloidal silica contained 32.12 wt% silica, and had a pH of 6-8. The degree of modification was 1.4 molecules per nm$^2$ of silica surface, measured by Sear's titration. The organosilane compound used to modify the silica was (3-glycidyloxypropyl)triethoxysilane.

Colloidal Silica 3 (CS3)

A non-functionalised colloidal silica with a surface area of 300 m$^2$/g, a particle size of 9 nm, containing 31.71 wt% silica, and having a pH of 9.0-10.5.

Colloidal Silica 4 (CS4)

A non-functionalised colloidal silica with a surface area of 250 m$^2$/g, a particle size of 11 nm, containing 41.48 wt% silica, and having a pH of 9.0-10.5.

Colloidal Silica 5 (CS5)

A non-functionalised colloidal silica with a surface area of 200 m$^2$/g, a particle size of 14 nm, containing 39.95 wt% silica, and having a pH of 9.0-10.5.

Colloidal Silica 6 (CS6)

A non-functionalised colloidal silica with a surface area of 160 m$^2$/g, a particle size of 17 nm, containing 31.31 wt% silica, and having a pH of 2-4.

Colloidal Silica 7 (CS7)

A cationically modified colloidal silica with a surface area of 160 m$^2$/g, a particle size of 17 nm, containing 30.72 wt% silica, and having a pH of 2-4.

Colloidal Silica 8 (CS8)

An Al-modified colloidal silica with a surface area of 500 m$^2$/g, a particle size of 5 nm, containing 16.61 wt% silica, and having a pH of 9.0-10.5.

Colloidal Silica 9 (CS9)

A non-functionalised colloidal silica with a surface area of 750 m$^2$/g, a particle size of 4 nm, containing 16.01 wt% silica, and having a pH of 9.0-10.5.

Colloidal Silica 10 (CS10)

A non-functionalised colloidal silica with a surface area of 170 m$^2$/g, a particle size of 16 nm, containing 39.95 wt% silica, and having a pH of 9.0-10.5.

Colloidal Silica 11 (CS11)

A cationically modified colloidal silica with a surface area of 110 m$^2$/g, a particle size of 80 nm, containing 39.76 wt% silica, and having a pH of 2-4.

Colloidal Silica 12 (CS12)

An Al-modified colloidal silica with a surface area of 1100 $m^2$/g, a particle size of 2 nm, containing 7.78 wt% silica, and having a pH of 9.0-10.5.

Colloidal Silica 13 (CS13)

A non-functionalised colloidal silica with a surface area of 80 $m^2$/g, a particle size of 34 nm, containing 51.20 wt% silica, and having a pH of 9.0-10.5.

The core properties of Colloidal Silicas 1-13 used in the following examples are summarized in the following Table 1.

Table 1. Properties of Colloidal Silicas 1-13

| Colloidal Silica No. | Solid content* (wt%) | Particle size (nm)** | Surface area ($m^2$/g)*** | Type | pH |
|---|---|---|---|---|---|
| CS1 | 39.81 | 12 | 220 | Silane-mod | 6-8 |
| CS2 | 32.12 | 8 | 360 | Silane-mod | 6-8 |
| CS3 | 31.71 | 9 | 300 | Na stab | 9-10.5 |
| CS4 | 41.48 | 11 | 250 | Na stab | 9-10.5 |
| CS5 | 39.95 | 14 | 200 | Na stab | 9-10.5 |
| CS6 | 31.31 | 17 | 160 | Di | 2-4 |
| CS7 | 30.72 | 17 | 160 | Cat | 2-4 |
| CS8 | 16.61 | 5 | 500 | Al-mod | 9-10.5 |
| CS9 | 16.01 | 4 | 750 | Na stab | 9-10.5 |
| CS10 | 39.95 | 16 | 170 | Na stab | 9-10.5 |
| CS11 | 39.76 | 34 | 80 | Cat | 2-4 |
| CS12 | 7.78 | 2 | 1100 | Al-mod | 9-10.5 |
| CS13 | 51.20 | 34 | 80 | Na stab | 9-10.5 |

* Colloidal silica samples were placed in non-adherent polypropylene flasks and kept at 120°C for 24 h. The solid content results presented in Table 1 represent the percent mass variation (average value of three similar samples).
** The particle size was calculated using Equation 2 as described above using the surface area determined for each silica.
*** The surface area of the silica was measured by Sear's titration.

Description of the types. Na stab is a standard grade of colloidal silica with Na as the counter ion. The Di type is based on a Na stab product but with an additional step of ion exchange. The Cat product is as Na stab product that has been modified to have a cationic surface charge. Al-mod is a Na stab product that has been surface modified with sodium aluminate. Silane-mod is a Na stab product that has been modified with a silane (gammaglycidoxypropyltriethoxysilane) followed by an additional step of partial ion exchange. Colloidal Silica 1 has a surface coverage (degree of modification) of 1.7 silane/$nm^2$ colloidal silica surface area, and Colloidal Silica 2 has a surface coverage (degree of modification) of 1.4 silane/$nm^2$ colloidal silica surface area.

Example 1:

a) Mixture of magnesia sinter and modified colloidal silica

Several mixtures of magnesia sinter and modified colloidal silica with varying amounts of the components were prepared by mixing 97.3-84.9 wt.% magnesia sinter powder (fine magnesia sinter, available as MS30 from RHI-Magnesita, Brazil) with different amounts of Colloidal Silica 1 (2.7 up to 15.1 wt.-%). A blank test comprising magnesia only was also prepared.

As Colloidal Silica 1 has a solid content of 39.81 wt.% in water, the above amount range of from 2.7 up to 15.1.

wt.-% Colloidal Silica 1 corresponds to 1.08 to 6.01 wt.% solid colloidal silica in the final sinter mixtures.

Initially, a portion of magnesia sinter was weighted and spread in a 30 × 30 cm tray placed at the top of a mass recorder. Following, Colloidal Silica 1 was applied over the particles using a domestic spray equipment in different amounts. The amount of Colloidal Silica 1 was recorded for each sample and the composition was homogenized with a spatula. After, homogenization, the mixture was pressed as 70 × 20 × 10 mm prisms using a 40 MPa compacting pressure for 30 seconds. All samples were dried at 80°C overnight before tests were performed.

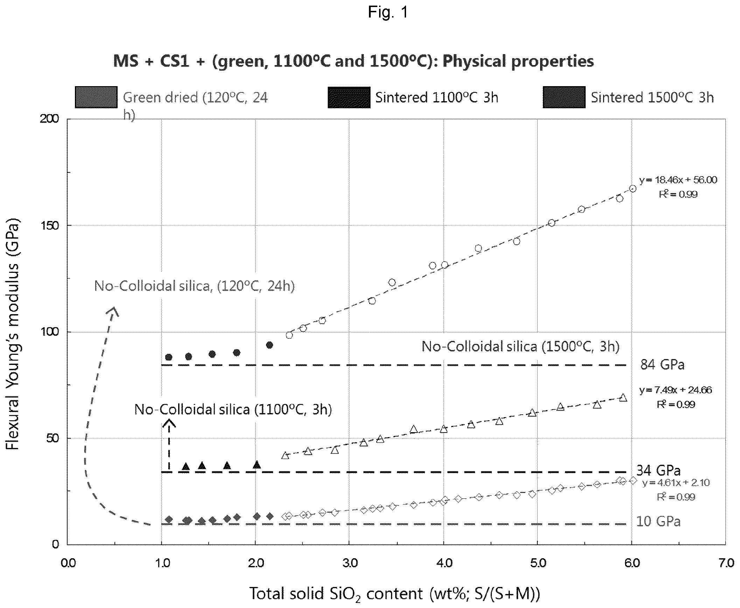

For all green dried samples, flexural elastic Young's modulus was measured by excitation by impulse non-destructive technique (for a detailed description of this technique see Example 2 below). Since samples' composition presented a slightly different amount of Colloidal Silica 1, these results are displayed in Figure 1 as a function of their total solid silica content.

For the green dried samples, flexural Young's modulus increased linearly with the amount of silica added to the composition (from 10 GPa for silica-free reference sample up to 29.9 GPa for the sample containing 6 wt.% of silica). Such a three-fold increase in rigidity is surprising and shows that the addition of Colloidal Silica 1 significantly improves the strength of green bricks. Moreover, no signs of damage by potential hydroxylation (i.e. formation of magnesium hydroxide) were observed in these samples.

After characterization at the green state, samples were sorted in a crescent rigidity order, numbered, and divided into two groups: the even were sintered at 1100°C, whereas the odd ones were sintered at 1500°C using the following sintering schedule: 1°C/min up to 400°C, 2°C/min up to 800°C, 5°C/min up to 1100°C and 1500°C, 3h hold; 5°C/min down to 800°C; natural cooling down to room temperature.

In both cases, addition of Colloidal Silica 1 increased the rigidity of the structures after sintering (up to 2 times for those sintered at 1500°C). Moreover, those samples sintered at 1100°C and containing up to 6 wt.% of silica have a rigidity close to the silica-free samples sintered at 1500°C. This indicates that the addition of Colloidal Silica 1 reduces the required pre-sintering temperature of the magnesia bricks for around 400°C.

b) Comparative mixture of magnesia sinter and dissolved polyvinyl alcohol (PVAl)

A mixture of magnesia sinter and dissolved polyvinyl alcohol (PVAl) was prepared by mixing 90 wt.% magnesia sinter powder (fine magnesia sinter, available as MS30 from RHI-Magnesita, Brazil) with 10 wt.% of a mixture containing 80 wt.% water and 20 wt.% PVAl.

Initially, a portion of magnesia sinter was weighted and spread in a 30 × 30 cm tray placed at the top of a mass recorder. Following, the mixture containing 80 wt.% water and 20 wt.% PVAl was applied over the particles using a domestic spray equipment. The composition was homogenized with a spatula. After, homogenization, the mixture was pressed as 70 × 20 × 10 mm prisms using a 40 MPa compacting pressure for 30 seconds. The sample was dried at 80°C overnight and then sintered at 1500°C using the sintering schedule as described above for the mixture of magnesia sinter and modified colloidal silica.

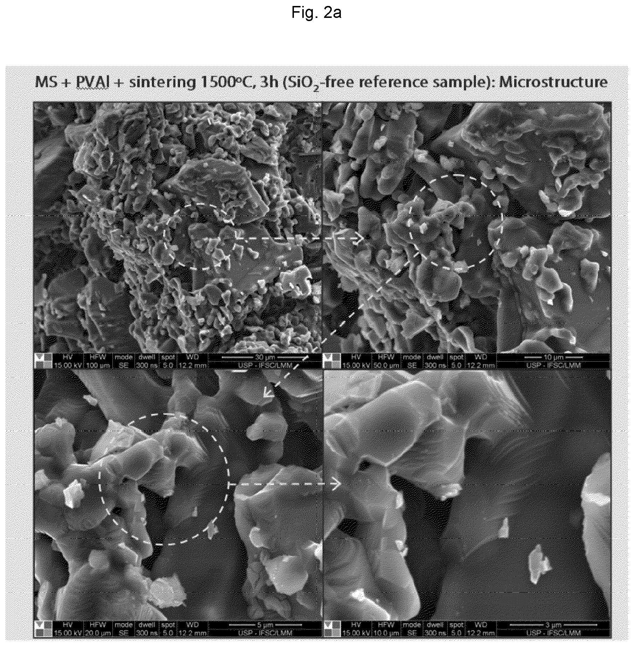

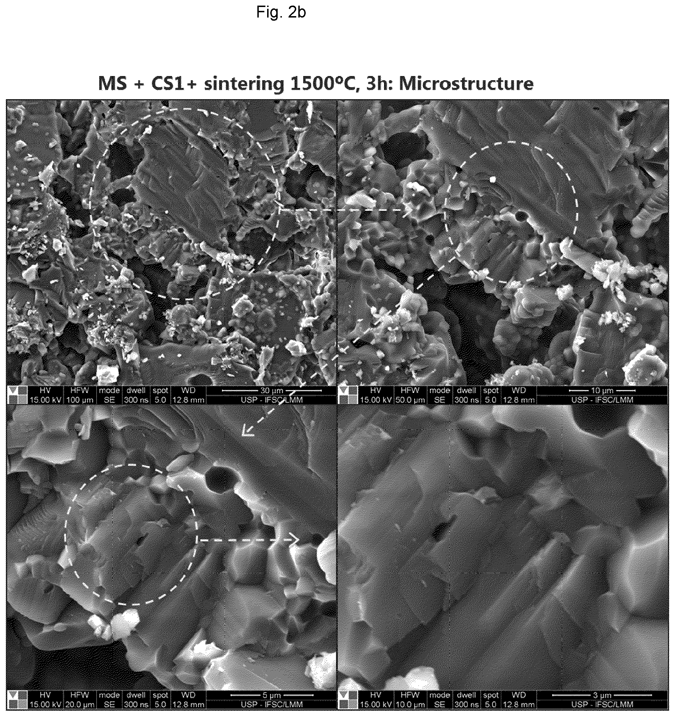

Using a field emission scanning electron microscopy (FEG-SEM, FEI 7500F, Holland), electron microscopy pictures of the surface of the sintered comparative mixture of magnesia sinter and dissolved PVAl as well as of the sintered inventive mixture of magnesia sinter and modified colloidal silica were made and are shown in Figure 2a (comparative mixture of magnesia sinter and dissolved PVAl) and Figure 2b (inventive mixture of magnesia sinter and modified colloidal silica).

As can be seen from Fig. 2a, the silica-free sample presented a standard granular microstructure for magnesia sintering. Several pores can be seen as a result of the lower timetemperature condition employed. Pores, however, are impairing the rigidity of the sintered material.

As can be seen from Fig. 2b, the addition of Colloidal Silica 1, on the other hand, produces a configuration in which silica particles fill the empty spaces amongst magnesia particles and behave as a high-temperature binder, and hence increase its rigidity. Fig. 2b shows that the inventive material comprising Colloidal Silica 1 has much less pores that the comparative material shown in Fig. 2b.

Example 2:

In addition to Colloidal Silicas 1-14 as described above, in Example 2 the following raw materials as set forth in the following Table 2 were used.

Table 2. Description of other raw materials used in the examples:

| Name used in examples | General name | Product (commercial name) |
|---|---|---|
| MS | MgO sinter, magnesia sinter or dead-burnt magnesia | Fine MgO sinter (MS30, RHI-Magnesita, Brazil) |
| $\alpha$-Al$_2$O$_3$ | Alpha-alumina | Calcined alumina (E-Sy 1000, Almatis, USA) |
| $\rho$-Al$_2$O$_3$ | Rho-alumina | Hydratable alumina (Alphabond 300, Almatis, USA) |
| CAC | Calcium aluminate cement | Calcium aluminate cement (EL70, Elfusa Geral de Eletrofusão, Brazil) |
| Dispersant | Poly carboxylate-ether | Castment FS20, BASF |

a) Evaluation of the stability and rehydroxylation with Magnesia sinter

All products were mixed with the same amount of magnesia sinter. All formulations are shown in Table 3. The water in these colloidal silica additions represent 1.5 times the stoichiometric amount of water to fully hydroxylate magnesia. They all contain the same quantity of magnesia sinter, MS, and water but different amounts of solid silica particles

Table 3. Formulations used, normalized to the sum of 100 g; (MS + water)

| Experiment No. | Colloidal silica product as of Table 1. | Magnesia Sinter (g) | Water (g) | Water as in the colloidal silica (g) | Colloidal Silica product (g) | Colloidal silica product (%) of formulation weight. |
|---|---|---|---|---|---|---|
| Ref 1 | - | 59.88 | 40.12 | - | - | - |
| 1 | CS4 | 59.88 | - | 40.12 | 58.75 | 49.52 |
| 2 | CS5 | 59.88 | - | 40.12 | 68.56 | 53.38 |
| 3 | CS6 | 59.88 | - | 40.12 | 66.81 | 52.73 |
| 4 | CS7 | 59.88 | - | 40.12 | 58.40 | 49.38 |
| 5 | CS8 | 59.88 | - | 40.12 | 57.90 | 49.16 |
| 6 | CS9 | 59.88 | - | 40.12 | 48.11 | 44.55 |
| 7 | CS10 | 59.88 | - | 40.12 | 47.77 | 44.37 |
| 8 | CS11 | 59.88 | - | 40.12 | 66.81 | 52.74 |
| 9 | CS12 | 59.88 | - | 40.12 | 66.60 | 52.66 |
| 10 | CS13 | 59.88 | - | 40.12 | 43.50 | 42.08 |
| 11 | CS14 | 59.88 | - | 40.12 | 82.21 | 57.86 |
| 12 | CS1 | 59.88 | - | 40.12 | 66.66 | 52.67 |
| 13 | CS2 | 59.88 | - | 40.12 | 59.10 | 49.68 |

The suspensions were kept at 60°C for up to 7 days to simulate the typical conditions found during the processing of MS in many industrial processes and for comparison with other studies that employed similar conditions. For each condition and at different intervals, three equivalent samples were removed from the oven, dried at 120°C for 24 h, weighted ($M_H$, g), calcined at 900°C for 5 h at 5°C/min and weighted again ($M_C$, g). The experimental hydroxylation degree ($W_{H\_EXP}$, %, ranging from 0 up to 100 %) for each condition was calculated according to Equation 3:

$$W_{H\_EXP} (\%) = 100\% \times [(M_H - M_C)/(0.45\ M_C)] \qquad \text{Equation 3}$$

where 0.45 refers to the theoretical hydroxylation degree obtained when $M_H$ and $M_C$ were equal to the molecular mass

of Mg(OH)$_2$ (58.3 g.mol$^{-1}$) and MgO (40.3 g.mol$^{-1}$), respectively [Ceramics International (2007), 33 (5), pp. 803-810 and Ceramics International (2015), 41 (10), pp. 13998-14007]. The result for this evaluation is shown, together with observations on gel formation and general stability, in Table 4.

Table 4. Results. The gel time is determined as the time from mixing to when there is no flow of the mixture.

| Experiment No. | Formation of agglomerates during mixing (Y/N) | Time to gel formation | Formation of supernatant | Hydroxylation degree (WH) |
|---|---|---|---|---|
| Ref 1 | N | >5h | Y | 51.34 |
| 1 | Y | <1.5 min | Y | 35.18 |
| 2 | Y | <1 min | Y | 41.78 |
| 3 | Y | <1 min | Y | 39.01 |
| 4 | Y | <20 s | N | 34.56 |
| 5 | Y | <20 s | N | 35.14 |
| 6 | Y | <1 min | Y | 30.72 |
| 7 | Y | <1 min | Y | 24.72 |
| 8 | Y | <1.5 min | N | 39.40 |
| 9 | Y | <10 s | N | 46.92 |
| 10 | Y | <20 s | N | 31.51 |
| 11 | Y | <1 min | N | 40.44 |
| 12 | N | >1h | N | 34.27 |
| 13 | N | ca. 20 min | N | 31.56 |

The results presented in the Table 4 show that only Example 12 and 13, according to the invention, meet all the requirements of having a long gel time, in combination with a homogenous phase (i.e. no separation/formation of supernatant) and a low degree of hydroxylation which are needed for a magnesia castable.

b) Evaluation of colloidal silica 1 (CS1; silane modified colloidal silica according to the invention) as a binder in magnesia sinter refractories (compared with commercial additives):

The components used in these experiments and their respective amounts (in parts by weight) are shown in Table 5 below.

Table 5. Formulations, parts by weight, used in evaluation of magnesia sinter refractories.

| Raw materials | Ref 2 | Ref 3 | Experiment 14 |
|---|---|---|---|
| MgO (as magnesia sinter) | 23.14 | 23.09 | 23.00 |
| □-Al$_2$O$_3$ | 57.01 | 56.16 | 58.18 |
| Dispersant (calc. in dry) | 0.001 | 0.001 | 0.001 |
| H$_2$O | 13.54 | 13.34 | 0 |
| □-Al$_2$O$_3$ | 6.32 | 0 | 0 |
| calcium aluminum cement (CAC) | 0 | 7.41 | 0 |
| CS1 | 0 | 0 | 18.83 |
| Total | 100 | 100 | 100 |

Preparation of the samples: calcined alumina, magnesia sinter, the binders (calcium aluminate cement and hydratable alumina (□-Al$_2$O$_3$)), and the dispersant were dry mixed and added to a proper content of distilled water or colloidal silica. For colloidal silica-containing samples, only calcined alumina, magnesia sinter, and dispersant were dry and wet mixed. The wet mixing was carried out in a paddle mixer for 3 min at 1000 rpm. After mixing, samples were cast in cylindric non-adherent molds (70 mm length by 16 mm diameter).

All samples were kept at 60°C for 72 h in an environment of humidity close to 100 %. After demolding, they remained at 60°C in ventilated environment for 24 h and were dried at 120°C for 24 h followed by sintering at 1500°C for 3h (2°C/min heating rate up to 800°C, 5°C/min heating rate up to 1500°C, 10°C.min$^{-1}$; cooling rate down to room temperature).

The samples were measured (length = $L_i$; Diameter = Di, in cm) and weighted (Mi, in g) before and after sintering. Their permanent thermal linear variation (PTLV, %) after sintering was calculated by Equation 4 (i indexes are related to green, 0, or fired, F, samples):

$$LR = 100\% \times (L_0 - L_F) / L_0 \qquad \text{Equation 4}$$

The elastic modulus (E, GPa) of the sintered samples was measured by the impulse excitation of vibration technique (Sonelastic, Brazil), according to ASTM E 1876-01 standard ("Standard Test Method for Dynamic Young's Modulus, Shear Modulus, and Poisson's Ration by Impulse Excitation of Vibration"). The Impulse Excitation Technique characterizes the elastic modulus and damping of materials based on the acoustic response emitted by a sample after receiving a light impulse excitation. This acoustic response contains the specimen natural frequencies of vibration, which are proportional to the elastic modulus, and presents amplitude decay proportional to the damping. For regular geometries, such as bars, cylinders, discs and rings, there are analytical equations relating the elastic modulus and the sample's natural frequencies of vibration, dimensions and mass. In this technique, a prismatic sample is placed over a polymeric foam holder and a gentle impact is applied in one of its edges. In such a condition, the sample begins to vibrate in its natural frequency producing a characteristic sound (with particular wavelength and frequency) that is recorded by an omnidirectional microphone. Following, with sample's natural frequency and length, diameter, and mass, its flexural elastic modulus (or flexural Young's modulus) can be calculated in a non-destructive way.

The flexural strength of rupture ($\sigma_R$) was measured by a three-point bending test (MTS 810 TestStar II, 2 N.s$^{-1}$ load application rate; see following Equation 5).

$$\sigma_R = \frac{8 \times F \times S}{\pi \times D^3} \qquad \text{Equation 5}$$

F is the maximum applied load (N), S is the distance between the two supporting points (m), and D (m) is the average diameter of the test sample, respectively. In all cases, three samples were tested for each condition. The results are summarized in the following Table 6.

Table 6. Results from evaluations of MS refractories

|  | Ref. 2 | Ref. 3 | Experiment 14 |
|---|---|---|---|
| Elastic Modulus, E-flex (GPa) | 47 | 173 | 175 |
| Flexural strength of rupture, σ-rup (MPa) | 32 | 73 | 62 |
| PTLV (%) | +2.7 | -7% | -3.8 |

These results show that only the composition of Example 14 according to the invention containing Colloidal Silica 1 (CS1) results in a material of good strength and high Elastic Modulus, in combination with good dimensional stability manifested as low degree of dimensional change; PTLV (%).

c) Evaluation of the effect of different amounts of modified silica in magnesia-containing refractory compositions.

Refractory composition comprising Colloidal Silica 1 (CS 1) is different amounts were prepared as in the following Table 7.

Table 7.

|  | Experi - ment 15 | Experi - ment 16 | Experi - ment 17 | Experi - ment 18 | Ref. 4 | Ref. 5 |
|---|---|---|---|---|---|---|
| magnesia sinter (MS) (g) | 28.00 | 29.75 | 30.63 | 31.50 | 30.23 | 30.23 |
| $\square$-$Al_2O_3$ (g) | 71.12 | 75.57 | 77.79 | 80.01 | 74.48 | 73.50 |
| CS 1 (g) | 26.40 | 21.04 | 14.44 | 7.43 | - | - |
| additional (external) water (g) | 0.00 | 3.54 | 7.28 | 11.23 | 17.69 | 17.46 |
| CAC | - | - | - | - | - | 16.20 |
| hydratable alumina | - | - | - | - | 13.95 | - |
|  |  |  |  |  |  |  |
| $SiO_2$ (from CS1, g) | 10.51 | 8.38 | 5.75 | 2.96 | - | - |
| $H_2O$ (from CS1, g) | 15.89 | 12.66 | 8,69 | 4.47 | - | - |
| additional (external) water (g) | 0.00 | 3.54 | 7,28 | 11.23 | 17.69 | 17.46 |
| Total solid silica content in colloidal silica | 39.81 | 34.08 | 26.47 | 15.84 | - | - |

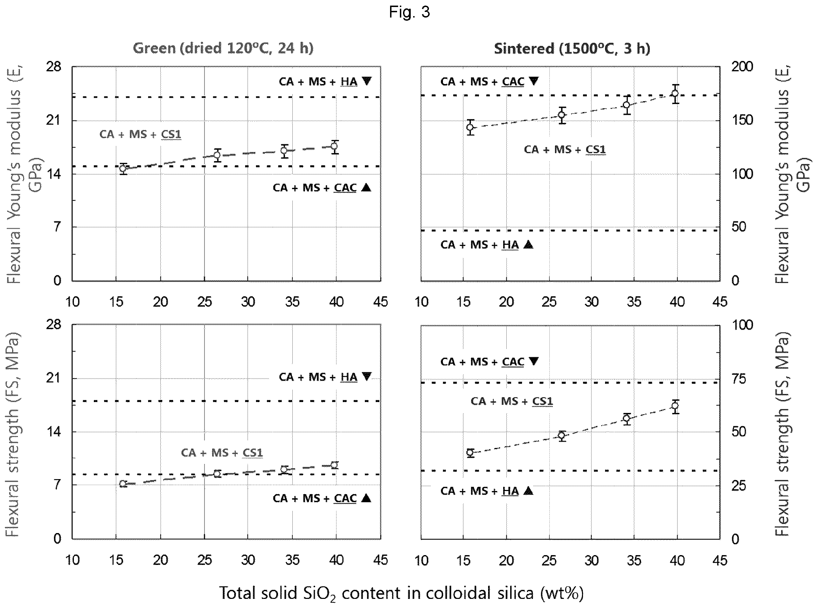

Flexural Young's modulus and flexural strength of the dried greenling (at 120°C for 24h) and the sintered composition (at 1500°C for 3h, using the sintering scheduled as described above) were measured. The results are shown in Figure 3.

Figure 3 shows that the flexural Young's modulus and flexural strength of the compositions of inventive Experiments 15-18 do not significantly change with varying amounts of modified silica. Moreover, the Young's modulus and flexural strength of the compositions of inventive Experiments 15-18 are similar to the respective values obtained for the compositions of reference examples 4 and 5 (Ref. 4 and 5) which represent refractory compositions containing commonly used binders such as hydratable alumina (Ref. 4) an calcium aluminum cement (Ref. 5).

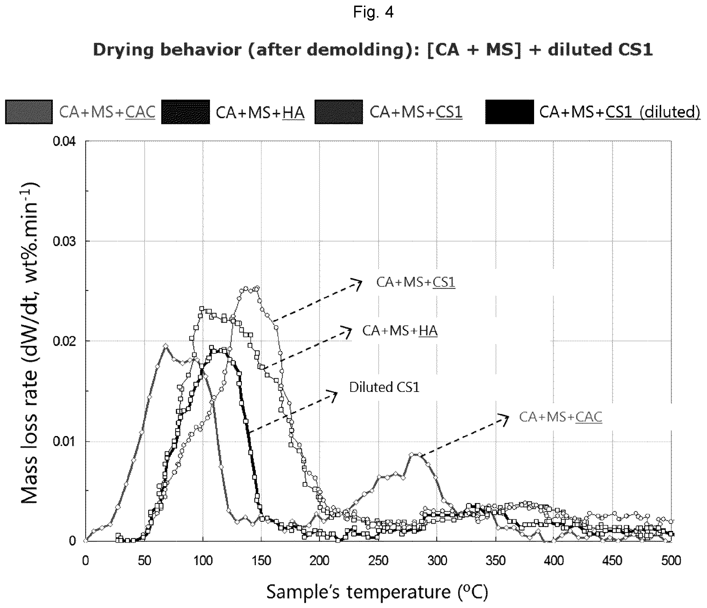

Moreover, the drying behavior of the compositions of Experiments 15 and 18 as well as of Reference Experiments 4 and 5 (Ref. 4 and 5) was studied. The results are shown in Figure 4.

Figure 4 shows the mass loss rate at increasing temperatures of the examined compositions. A mass loss rate > 0 indicates that water is evaporated from the composition. It can be seen that a lower amount of modified silica decreases the temperature at which water is evaporated. A lower temperature for water evaporation is desirable. It can further be seen that the temperature at peak water evaporation for the modified silica comprising compositions of the present invention is in a similar area as the temperatures for the compositions of reference examples 4 containing hydratable alumina. The graph for reference example 5 containing CAC indicates that there are significant amounts of magnesium hydroxide formed as significant amounts of water are evaporated at around 200-300°C. This water stems from magnesium hydroxide.

**Claims**

1. A composition for producing magnesia-containing refractories comprising

   (i) magnesia, and
   (ii) a modified colloidal silica, in which the colloidal silica is modified with at least one organosilane moiety comprising a silicon atom bound to the carbon atom of an organic group.

2. The composition of claim 1, further comprising
   (iii) alumina.

3. The composition of claim 1 or 2, wherein the organosilane moiety comprises one or more groups $R^m$ which is bound to the silicon atom of the organosilane, in which:

   each $R^m$ is independently selected from alkyl, alkenyl, epoxy alkyl, aryl, heteroaryl,
   $C_{1-6}$ alkylaryl and $C_{1-6}$ alkylheteroaryl groups, optionally substituted with one or more groups selected from

ER$^n$, isocyanate and isocyanurate;

E is either not present, or is a linking group selected from -O-, -S-, OC(O)-, -C(O)-, -C(O)O-, -C(O)OC(O)-, -N(R$^p$)-, -N(R$^p$)C(O)-, -N(R$^p$)C(O)N(R$^p$)- and - C(O)N(R$^p$)-, where R$^p$ is H or C$_{1-6}$ alkyl;

R$^n$ is linked to E, or directly to R$^m$ if E is not present;

R$^n$ is selected from halogen (typically F, Cl or Br), alkyl, alkenyl, aryl, heteroaryl, C$_{1-3}$ alkylaryl and C$_{1-3}$ alkyl-heteroaryl, and each R$^n$ is optionally substituted with one or

more groups selected from hydroxyl, halogen (typically F, Cl or Br), epoxy, -OR$^p$ or - N(R$^p$)$_2$;

if E is present, R$^n$ can also be hydrogen,

wherein alkyl groups can be aliphatic, cyclic or can comprise both aliphatic and cyclic portions, and any aliphatic groups can be linear or branched.

4. The composition of any of claims 1 to 3, wherein the the organosilane moiety comprises at least one group selected from hydroxyl, thiol, carboxyl, ester, epoxy, acyloxy, ketone, aldehyde, glycol ether, (meth)acryloxy, amino, amido, ureido, isocyanate or isocyanurate.

5. The composition of any of claims 1 to 4, wherein the organosilane moiety comprises an epoxy group or at least one hydroxyl group, and preferably an epoxy group.

6. The composition of any of claims 1-5, which further comprises water, preferably in an amount of 1 to 50 wt.%, more preferably of 5 to 40 wt.%, even more preferably from 8 to 30 wt.%, and most preferably of 10 to 20 wt.%, the wt.% being based on the total weight of the composition for producing magnesia-containing refractories.

7. The composition of any of claims 1-6, wherein the composition is basically free of calcium aluminate cement.

8. The composition of any of claims 1-7, wherein the content of (i) magnesia is from 1 to 99.9 wt.-%, such as from 1 to 99 wt-%, from 1 to 95 wt.% or from 1 to 90 wt.%, preferably from 1 to 70 wt.%, more preferably from 5 to 60 wt.%, even more preferably from 10 to 50 wt.%, such as from 15 to 40 wt.%, and most preferably from 20 to 30 wt.%, the wt.% being based on the total weight of the composition for producing magnesia-containing refractories.

9. The composition of any of claims 1-8, wherein the content of (ii) modified colloidal silica is from 0.1 to 99 wt.%, such as from 0.1 to 95 wt.%, from 0.1 to 90 wt.%, or from 0.1 to 80 wt.%, preferably from 0.1 to 50 wt.%, more preferably from 0.5 to 40 wt.%, even more preferably from 1 to 30 wt.%, such as from 5 to 20 wt.%, and most preferably from 7 to 15 wt.%, the wt.% being based on the total weight of the composition for producing magnesia-containing refractories.

10. The composition of any of claims 2-9, wherein the content of (iii) alumina is from 10 to 98.9 wt.%, preferably from 20 to 95 wt.%, more preferably from 30 to 90 wt.%, even more preferably from 40 to 80 wt.% and most preferably from 50 to 70 wt.%, the wt.% being based on the total weight of the composition for producing magnesia-containing refractories.

11. Magnesia-containing refractory obtained from the composition of any of claims 1-10.

12. Process for preparing a refractory comprising

(i) providing a composition as defined in any of claims 1 to 109 or, alternatively, the individual components magnesia, modified colloidal silica, optionally alumina, and optionally water;
(ii) mixing the composition or the individual components magnesia, modified colloidal silica, optionally alumina and optionally water;
(iii-a) optionally pressing the obtained mixture into a desired shape; or
(iii-b) optionally, curing the obtained mixture, preferably at 1 to 80°C;
(iv) optionally, drying the obtained mixture, preferably at 80 to 400°C; and
(v) sintering the mixture, preferably at 800 to 2000°C.

13. Use of modified colloidal silica particles for preparing refractories and compositions for preparing refractories, in which the modified colloidal silica particles comprise at least one surface-bound organosilane moiety comprising a silicon atom bound to the carbon atom of an organic group.

14. Use of modified colloidal silica particles for reducing cracks in refractories, preferably for reducing cracks formed by the formation of magnesium hydroxide, in which the modified colloidal silica particles comprise at least one surface-bound organosilane moiety comprising a silicon atom bound to the carbon atom of an organic group.

15. Use of modified colloidal silica particles as a pressing aid for magnesia sinter, in which the modified colloidal silica particles comprise at least one surface-bound organosilane moiety comprising a silicon atom bound to the carbon atom of an organic group.

Fig. 1

**MS + CS1 + (green, 1100°C and 1500°C): Physical properties**

EP 4 311 817 A1

Fig. 2a

Fig. 2b

## MS + CS1+ sintering 1500°C, 3h: Microstructure

Fig. 3

Green (dried 120°C, 24 h)

Sintered (1500°C, 3 h)

Total solid SiO$_2$ content in colloidal silica (wt%)

Fig. 4

**Drying behavior (after demolding): [CA + MS] + diluted CS1**

EP 4 311 817 A1

Europäisches
Patentamt

European
Patent Office

Office européen
des brevets

# EUROPEAN SEARCH REPORT

Application Number

EP 22 18 7350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 108 059 448 A (HUNAN RAMON SCIENCE & TECHNOLOGY CO LTD) 22 May 2018 (2018-05-22) * examples 1-8; table 1 * ----- | 1-15 | INV. C04B35/043 C04B35/101 C04B35/628 C01B33/146 |
| X | US 5 168 082 A (MATCHETT STEPHEN A [US] ET AL) 1 December 1992 (1992-12-01) * column 2, line 21 – line 52; examples 1,2 * ----- | 13,14 | |
| X,D | WO 2004/035473 A1 (AKZO NOBEL NV [NL]; EKA CHEMICALS AB [SE]; GREENWOOD PETER [SE]) 29 April 2004 (2004-04-29) * page 6, line 30 – line 36; claims 4,5 * ----- | 13 | |

TECHNICAL FIELDS
SEARCHED      (IPC)

C04B
C01B

The present search report has been drawn up for all claims

| Place of search | Date of completion of the search | Examiner |
|---|---|---|
| Munich | 10 January 2023 | Bonneau, Sébastien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 18 7350

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2023

| Patent document cited in search report | | Publication date | Patent family member(s) | | Publication date |
|---|---|---|---|---|---|
| CN 108059448 | A | 22-05-2018 | NONE | | |
| US 5168082 | A | 01-12-1992 | NONE | | |
| WO 2004035473 | A1 | 29-04-2004 | AT | 421485 T | 15-02-2009 |
| | | | AU | 2003265191 A1 | 04-05-2004 |
| | | | AU | 2003265192 A1 | 04-05-2004 |
| | | | BR | 0315284 A | 30-08-2005 |
| | | | CA | 2501409 A1 | 29-04-2004 |
| | | | CN | 1692073 A | 02-11-2005 |
| | | | CN | 1692074 A | 02-11-2005 |
| | | | DK | 1554220 T3 | 18-05-2009 |
| | | | EP | 1554220 A1 | 20-07-2005 |
| | | | EP | 1554221 A1 | 20-07-2005 |
| | | | ES | 2320757 T3 | 28-05-2009 |
| | | | ES | 2329239 T3 | 24-11-2009 |
| | | | JP | 4649209 B2 | 09-03-2011 |
| | | | JP | 4849800 B2 | 11-01-2012 |
| | | | JP | 5364073 B2 | 11-12-2013 |
| | | | JP | 2006502954 A | 26-01-2006 |
| | | | JP | 2006503156 A | 26-01-2006 |
| | | | JP | 2011057995 A | 24-03-2011 |
| | | | KR | 20050061535 A | 22-06-2005 |
| | | | PL | 202648 B1 | 31-07-2009 |
| | | | PL | 203008 B1 | 31-08-2009 |
| | | | RU | 2282585 C2 | 27-08-2006 |
| | | | TW | I244465 B | 01-12-2005 |
| | | | TW | I319415 B | 11-01-2010 |
| | | | WO | 2004035473 A1 | 29-04-2004 |
| | | | WO | 2004035474 A1 | 29-04-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004035473 A
- WO 2004035474 A
- US 4927749 A
- US 2630410 A
- US 5368833 A

**Non-patent literature cited in the description**

- **GREENWOOD ; GEVERT.** *Pigment and Resin Technology,* 2011, vol. 40 (5), 275-284
- **ILER, K. RALPH.** The Chemistry of Silica. John Wiley & Sons, 1979, 407-409
- **G.W.SEARS.** *Anal. Chem.,* 1956, vol. 28 (12), 1981-1983
- **ILER, K. RALPH.** The Chemistry of Silica. John Wiley & Sons, 1979, vol. 465
- **ILER, R. K. ; DALTON, R. L.** *J. Phys. Chem.,* 1956, vol. 60, 955-957
- *Ceramics International,* 2007, vol. 33 (5), 803-810
- *Ceramics International,* 2015, vol. 41 (10), 13998-14007